# EUROPÄISCHE PATENTSCHRIFT

(11) **EP 2 830 807 B1**
(45) Veröffentlichungstag und Bekanntmachung des Hinweises auf die Patenterteilung: **30.12.2015**
(21) Anmeldenummer: 13712239.6
(22) Anmeldetag: 25.03.2013
(51) Int. Cl.: B23K 9/067, B23K 9/173

(54) **SCHWEISSVORRICHTUNG MIT ZWEI SCHWEISSBRENNERN UND STEUEREINHEIT ZUM STARTEN DER LICHTZÜNDUNG ; VERFAHREN ZUM SCHWEISSEN MIT ZWEI SCHWEISSPROZESSEN UNTER EINEM ANGEPASSTEN STARTVORGANG**
DEVICE HAVING TWO WELDING TORCHES AND CONTROL UNIT FOR STARTING THE ARC IGNITION PROCESS ; METHOD FOR WELDING WITH TWO WELDING PROCESSES UNDER AN ADAPTED STARTING PROCESS
DISPOSITIF DE SOUDAGE COMPORTANT DEUX CHALUMEAUX DE SOUDAGE ET UNE UNITÉ DE COMMANDE DESTINÉE À INITIER L'AMORÇAGE LUMINEUX ; PROCÉDÉ DE SOUDAGE DESTINÉ AU SOUDAGE EN METTANT EN OEUVRE DEUX PROCESSUS DE SOUDAGE PILOTÉS PAR UN PROCESSUS D'INITIATION ADAPTÉ

(30) Priorität: 29.03.2012 AT 3852012
(43) Veröffentlichungstag der Anmeldung: 04.02.2015
(73) Patentinhaber: Fronius International GmbH, 4643 Pettenbach (AT)
(72) Erfinder: WALDHÖR, Andreas, A-4643 Pettenbach (AT); SÖLLINGER, Dominik, A-4631 Krenglbach (AT); ALLERSTORFER, Rene, A-4070 Eferding (AT)
(74) Vertreter: Rau, Schneck & Hübner Patentanwälte Rechtsanwälte PartGmbB
(86) Internationale Anmeldenummer: PCT/EP2013/056241
(87) Internationale Veröffentlichungsnummer: WO 2013/144076

(56) Entgegenhaltungen:
- WO-A1-2005/056228
- CN-A- 102 248 253
- DE-U1- 29 780 371
- JP-A- 2002 224 833
- US-A1- 2009 294 428

## Beschreibung

Die Erfindung betrifft eine Schweißvorrichtung ein Verfahren zum Schweißen mit mindestens einem ersten Schweißprozess und einem zweiten Schweißprozess, die miteinander kombiniert werden gemäß dem Oberbegriff du Ansprüche 1 und 10 (siehe, z.B., JP 2002/224833 A).

Eine Schweißvorrichtung und ein Schweißverfahren sind beispielsweise, auch in der WO 2005/056 228 A1 beschrieben. Einer der beiden Schweißprozesse kann dabei als ein Puls-Schweißprozess, als ein Sprühlichtbogen-Schweißprozess oder als ein Kalt-Metall-Transfer (Cold Metal Transfer; CMT)-Schweißprozess mit einer Vor- und Rückbewegung eines Schweißdrahts ausgebildet sein, wohingegen der zweite Schweißprozess jedenfalls als ein Kalt-Metall-Transfer-Schweißprozess ausgeführt ist. Die beiden Schweißprozesse sind zeitlich miteinander synchronisiert. Letzteres gilt allerdings nur für den eigentlichen Schweißbetrieb. Der Startvorgang und insbesondere die Zündung der Lichtbögen der beiden Schweißprozesse erfolgt dagegen zufällig. Dadurch ergibt sich während des Startvorgangs ein bisweilen erhöhter Materialauftrag, der undefiniert und nicht erwünscht ist.

Die die Schweißvorrichtung betreffende Aufgabe der Erfindung besteht deshalb darin, eine Schweißvorrichtung der eingangs bezeichneten Art mit einem verbesserten Startvorgang anzugeben.

Zur Lösung dieser Aufgabe wird eine Schweißvorrichtung entsprechend den Merkmalen des Patentanspruchs 1 angegeben. Bei der erfindungsgemäßen Schweißvorrichtung ist die Steuereinheit dazu ausgelegt, einen Startvorgang so durchzuführen, dass zuerst eine Lichtbogenzündung an einem der beiden Schweißbrenner erfolgt und nach Ablauf einer Wartezeit seit der ersten Lichtbogenzündung eine zweite Lichtbogenzündung an dem bis dahin ungezündeten anderen der beiden Schweißbrenner erfolgt. Weiterhin ist die Steuereinheit dazu ausgelegt, vor oder während der an dem einen der beiden Schweißbrenner erfolgenden ersten Lichtbogenzündung den Schweißdraht des anderen der beiden Schweißbrenner mit seinem Schweißdrahtende in eine Warteposition zu überführen, wobei sich das Schweißdrahtende des anderen der beiden Schweißbrenner bis zum Ende der Wartezeit in der Warteposition befindet.

Die Schweißvorrichtung kann insbesondere für genau zwei Schweißprozesse mit zwei Schweißbrennern ausgelegt sein. Ebenso ist es aber möglich, dass die Schweißvorrichtung mehr als zwei Schweißprozesse mit dementsprechend mehr als zwei Schweißbrennern enthält. Bei der erfindungsgemäßen Schweißvorrichtung wird gezielt eine definierte Zündung an den beteiligten mindestens zwei Schweißbrennern vorgesehen. Es bleibt also nicht mehr dem Zufall überlassen, welcher der Schweißbrenner zuerst gezündet wird und mit welchem zeitlichen Abstand nach dieser ersten Zündung die Zündung des/der anderen Schweißbrenner erfolgt. Bei dem vorteilhaften Startvorgang der Schweißvorrichtung wird sichergestellt, dass zunächst eine Lichtbogenzündung an einem, insbesondere vorgebbaren Schweißbrenner stattfindet, wohingegen das Schweißdrahtende des oder der anderen Schweißbrenner sich bis zum Ende der Wartezeit in der insbesondere definierten Warteposition befindet. Der oder die zunächst ungezündeten Schweißbrenner werden vorteilhafterweise sehr rasch zu Beginn des Startvorgangs ebenfalls in einen definierten Zustand gebracht, um nach Ablauf der Wartezeit schnell und insbesondere dann ohne Zwischenschaltung weiterer vorbereitender Schritte ebenfalls gezündet zu werden.

Aufgrund dieses günstigen Startvorgangs der Schweißvorrichtung lässt sich sehr genau festlegen, wie viel Material zu Beginn der Schweißprozesse aufgetragen wird. Ebenso lässt sich festlegen, wie viel Einbrand und wie viel Wärmeeinbringung anfangs erzeugt wird. Dadurch wird auch die Qualität des Schweißresultats insgesamt verbessert.

Vorteilhafte Ausgestaltungen der Schweißvorrichtung ergeben sich aus den Merkmalen der von Anspruch 1 abhängigen Ansprüche.

Günstig ist eine Ausgestaltung, bei der zumindest einer der beiden Schweißprozesse als ein Puls-Schweißprozess, ein Sprühlichtbogen-Schweißprozess, ein Kurzlichtbogen-Schweißprozess oder ein Kalt-Metall-Transfer-Schweißprozess ausgebildet ist oder wenigstens einen als Puls-Schweißprozess, Sprühlichtbogen-Schweißprozess, Kurzlichtbogen-Schweißprozess oder Kalt-Metall-Transfer-Schweißprozess ausgebildeten Teilprozess enthält. Es ist also insbesondere möglich, dass der Schweißprozess nach der Zündung während einer anfänglichen Prozessphase, beispielsweise als Kalt-Metall-Transfer-Schweißprozess, durchgeführt wird, um nach einer bestimmten Prozessdauer auf einen anderen Schweißprozesstyp, beispielsweise auf einen Puls-Schweißprozess, umgestellt zu werden. Die Schweißvorrichtung ist also sehr flexibel einzusetzen. Sie bietet eine Vielzahl verschiedener Betriebsmodi, wobei jeweils der günstige Startvorgang mit dem definierten Zünden der beteiligen Schweißprozesse vorgesehen ist.

Gemäß einer weiteren günstigen Ausgestaltung ist die Steuereinheit dazu ausgelegt, vor der Lichtbogenzündung eine Vorwärtsbewegung des Schweißdrahts des einen den beiden Schweißbrennen in Richtung des zu schweißenden Werkstücks zu veranlassen und einen Kurzschluss dieses Schweißdrahts mit dem Werkstück zu erkenne. Dadurch lässt sich insbesondere zu Beginn des Schweißprozesses die Position der Schweißdrahtenden in Relation zu dem zu schweißenden Werkstück genau feststellen, wodurch eine definierte Lichtbogenzündung unter den jeweils gewünschten Bedingungen erfolgen kann. Auch bei dem zunächst nicht gezündeten Schweißbrenner ist die Vorwärts- und Rückwärtsbewegung des Schweißdrahts mit dem dazwischen liegenden Kurzschluss mit dem zu schweißenden Werkstück günstig, da man auf diese Weise das Schweißdrahtende des zugehörigen zweiten Schweißbrenners günstigerweise in die vorzugsweise definierte Warteposition bringen kann, von der aus die Zündung des zweiten Schweißprozesses und damit der zweite Schweißprozess an sich schnell und definiert gestartet werden kann.

Günstig ist eine weitere Ausgestaltung, bei der die Steuereinheit dazu ausgelegt ist, vor der Lichtbogenzündung eine Vorwärtsbewegung zumindest eines der beiden Schweißdrähte bis zum Berühren eines zu schweißenden Werkstücks und danach eine Rückwärtsbewegung dieses Schweißdrahts zu veranlassen, bis ein Schweißdrahtende dieses Schweißdrahts einen fest vorgegebenen oder einstellbaren Abstand zu dem Werkstück erreicht. Dieser Abstand kann dann vorteilhafterweise die Warteposition sein, in die der zugehörige Schweißbrenner bis zur Lichtbogenzündung überführt wird. Dieser Abstand zwischen dem Schweißdrahtende und dem zu schweißenden Werkstück ist bei dieser Ausgestaltung der Schweißvorrichtung also vorzugsweise entweder fest vorgegeben oder er kann eingestellt werden. Beides ist günstig und führt zu einem definierten Startvorgang und zu guten Schweißresultaten.

Gemäß einer weiteren günstigen Ausgestaltung ist die Wartezeit von der ersten bis zur zweiten Lichtbogenzündung fest vorgegeben oder einstellbar. Auch dadurch erhöhen sich die Flexibilität und die Einsatzmöglichkeiten der Schweißvorrichtung.

Gemäß einer günstigen alternativen Ausgestaltung kann die Steuereinheit auch dazu ausgelegt sein, eine Kopplung zwischen den beiden Schweißprozessen in der Gestalt herbeizuführen, dass sich die Wartezeit von der ersten bis zur zweiten Lichtbogenzündung durch einen Prozessfortschritt des nach der ersten Lichtbogenzündung begonnenen Schweißprozesses oder zumindest eines Anfangsprozesses des nach der ersten Lichtbogenzündung begonnenen Schweißprozesses bestimmt, wobei der als Maß für die Wartezeit dienende Prozessfortschritt fest vorgegeben oder einstellbar ist. Letzteres führt wieder zu einer hohen Flexibilität und zu vielfältigen Einsatzmöglichkeiten bei der Schweißvorrichtung. Die bei dieser Ausgestaltung vorgesehene anfängliche Kopplung zwischen den Schweißprozessen ermöglicht es, den zweiten noch nicht gezündeten Schweißprozess erst dann starten zu lassen, wenn der erste bereits laufende Schweißprozess einen bestimmten Status erreicht hat. Dadurch wird ein zusätzliches Maß an Prozesssicherheit für den Ablauf des Startvorgangs erreicht.

Gemäß einer weiteren günstigen Ausgestaltung zeigt ein Steuersignal das Erreichen des maßgeblichen Prozessfortschritts des nach der ersten Lichtbogenzündung begonnenen Schweißprozesses oder dessen Anfangsprozesses an. Dieses Steuersignal kann dann unmittelbar dazu verwendet werden, den in der Warteposition befindlichen zweiten Schweißprozess bzw. zweiten Schweißbrenner zu starten, insbesondere zu zünden. Dadurch ergibt sich eine besonders einfache und effiziente anfängliche Kopplung zwischen den beiden Schweißprozessen.

Gemäß einer weiteren günstigen Ausgestaltung beträgt die Wartezeit von der ersten bis zur zweiten Lichtbogenzündung höchstens drei Sekunden. Diese maximale Zeitspanne für die Wartezeit hat sich als sehr vorteilhaft herausgestellt. Der genannte Maximalwert ist insbesondere lang genug, um den zunächst gezündeten ersten Schweißprozess definiert anzufahren. Andererseits ist er aber auch insbesondere kurz genug, um ein zu langes Schweißen mit nur einem von eigentlich zwei oder noch mehr vorgesehenen Schweißprozessen durchzuführen.

Günstig ist eine weitere Ausgestaltung, bei der eine Einstellbarkeit vorgesehen ist, an welchen der beiden Schweißbrenner die erste Lichtbogenzündung erfolgen soll. Auch dies erhöht die Einsatzflexibilität der Schweißvorrichtung. Insbesondere kann die Schweißvorrichtung dann auch mit entgegensetzten Schweißrichtungen betrieben werden, ohne dass ein Umbau erforderlich ist.

Die das Schweißverfahren betreffende weitere Aufgabe der Erfindung besteht darin, ein Schweißverfahren der eingangs bezeichneten Art mit einem verbesserten Startvorgang anzugeben.

Zur Lösung dieser Aufgabe wird ein Schweißverfahren entsprechend den Merkmalen des Patentanspruchs 10 angegeben. Bei dem Schweißverfahren wird ein Startvorgang beider Schweißprozesse so durchgeführt, dass zuerst ein erster Lichtbogen im Rahmen eines der beiden Schweißprozesse gezündet wird, und nach der Zündung des ersten Lichtbogens eine Wartezeit verstreicht, ehe ein zweiter Lichtbogen im Rahmen des anderen der beiden Schweißprozesse gezündet wird. Außerdem wird vor oder während der Zündung des ersten Lichtbogens ein an dem anderen der beiden Schweißprozesse beteiligter Schweißdraht mit seinem Schweißdrahtende in eine Warteposition überführt, wobei sich das Schweißdrahtende des anderen der beiden Schweißbrenner bis zum Ende der Wartezeit in der Warteposition befindet.

Das erfindungsgemäße Schweißverfahren und seine Ausgestaltungen haben im Wesentlichen die gleichen besonderen Eigenschaften und Vorteile, die bereits im Zusammenhang mit der erfindungsgemäßen Schweißvorrichtung und deren Ausgestaltungen beschrieben worden sind.

Vorteilhafte Ausgestaltungen des erfindungsgemäßen Schweißverfahrens ergeben sich aus den von Patentanspruch 10 abhängigen Ansprüchen.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Schweißvorrichtung in schematischer Darstellung,
- Fig. 2: ein Ausführungsbeispiel einer Schweißvorrichtung mit zwei Schweißbrennern in schematischer Darstellung,
- Fig. 3: ein Ablaufdiagramm des Startvorgangs der beiden Schweißbrenner der Schweißvorrichtung gemäß Fig. 2,
- Fig. 4: ein Bewegungsdiagramm eines Schweißdrahts eines der beiden Schweißbrenner der Schweißvorrichtung gemäß Fig. 2 während des Startvorgangs, und
- Fig. 5: ein Bewegungsdiagramm eines Schweißdrahts des anderen der beiden Schweißbrenner der Schweißvorrichtung gemäß Fig. 2 während des Startvorgangs.

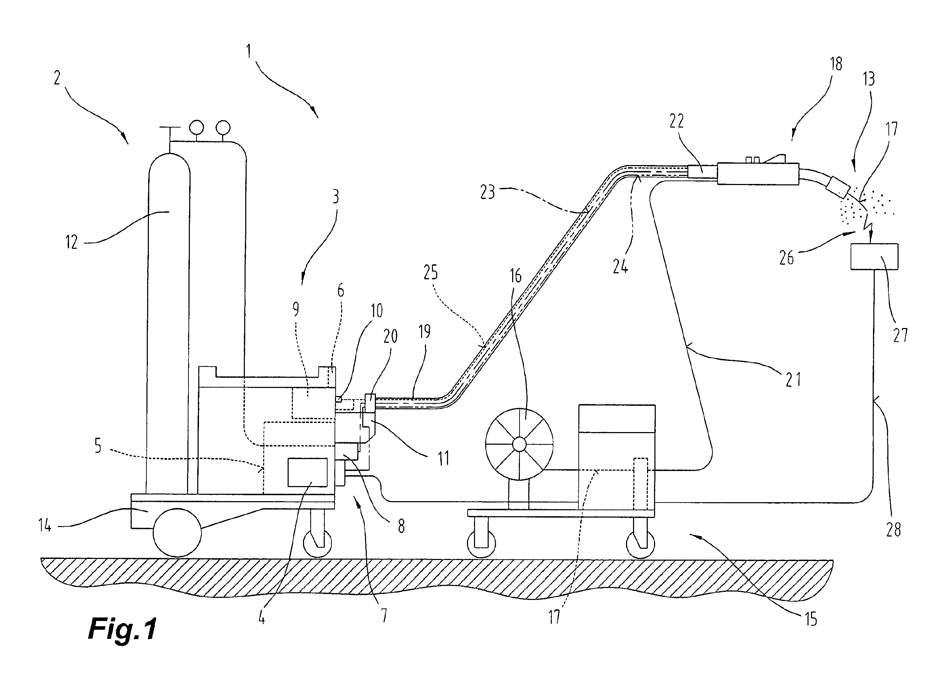

Einander entsprechende Teile sind in den Fig. 1 bis 5 mit denselben Bezugszeichen versehen. Auch Einzelheiten der im Folgenden näher erläuterten Ausführungsbeispiele können für sich genommen eine Erfindung darstellen oder Teil eines Erfindungsgegenstands sein.

In Fig. 1 ist ein Ausführungsbeispiel einer Schweißvorrichtung 1 gezeigt. Die Schweißvorrichtung 1 ist ein Schweißgerät oder eine Schweißanlage, die für verschiedene Schweißprozesse oder -verfahren, wie zum Beispiel MIG/MAG-Schweißen, WIG/TIG-Schweißen, Elektroden-Schweißen oder Doppeldraht-Tandem-Schweißen, ausgelegt ist. Weiterhin kann auch eine Auslegung für Plasma- oder Lötverfahren vorgesehen sein.

Die Schweißvorrichtung 1 umfasst eine Zentraleinheit 2, die manchmal auch als das eigentliche Schweißgerät bezeichnet wird. Die Zentraleinheit 2 umfasst eine Stromquelle 3 mit einem Leistungsteil 4, eine Steuereinheit 5 sowie eine Ein-/Ausgabeeinheit 6. Darüber hinaus können in der Zentraleinheit 2 weitere Komponenten vorgesehen sein, wie zum Beispiel ein der Steuereinheit 5 zugeordnetes Umschaltglied 7, ein mit dem Umschaltglied 7 verbundenes Steuerventil 8, ein Wasserbehälter 9 sowie ein Strömungswächter 10. Diese Komponenten der Zentraleinheit 2 sind bei dem in Fig. 1 gezeigten Ausführungsbeispiel in einem gemeinsamen Gehäuse 11 angeordnet. Weiterhin umfasst die Zentraleinheit 2 einen Gasspeicher 12 für ein Gas 13, insbesondere ein Schutzgas, wie beispielsweise CO₂, Helium oder dergleichen. Das Gehäuse 11 und der Gasspeicher 12 sind auf einem rollbaren Unterteil 14 platziert und bilden eine erste Teileinheit der Zentraleinheit 2.

Eine zweite Teileinheit der Zentraleinheit 2 ist durch eine ebenfalls rollbare Drahtvorschubeinheit 15 gebildet, welche auch über die Steuereinheit 5 der ersten Teileinheit angesteuert wird. Die Drahtvorschubeinheit 15 enthält eine Vorratstrommel 16, auf die ein Schweißdraht 17 aufgewickelt ist.

Grundsätzlich kann die Drahtvorschubeinheit 15 auch ein Bestandteil der ersten Teileinheit sein und sich mit innerhalb des Gehäuses 11 befinden. Bei dem in Fig. 1 gezeigten Ausführungsbeispiel ist die Drahtvorschubeinheit als gesondertes Zusatzgerät ausgebildet. Dies ist aber nicht zwingend erforderlich.

Außerdem umfasst die Schweißvorrichtung 1 eine Schweißbrennereinheit 18, die über ein Schlauchpaket 19 und eine Zugentlastung 20 an das Gehäuse 11 sowie über eine Versorgungsleitung 21 an die Drahtvorschubeinheit 15 angeschlossen ist.

Der in der Vorratstrommel 16 bevorratete Schweißdraht 17 wird mittels der Versorgungsleitung 21, wie insbesondere bei dem MIG/MAG-Schweißen üblich, der Schweißbrennereinheit 18 zugeführt. Grundsätzlich ist es aber auch möglich, dass die Drahtvorschubeinheit 15 den Schweißdraht 17 oder einen anderen Zusatzwerkstoff außerhalb der Schweißbrennereinheit 18 an die Prozessstelle, d. h. an die Stelle, an der der eigentliche Schweißprozess stattfindet, herangeführt wird. In dieser nicht in den Figuren gezeigten alternativen Ausgestaltung ist in der Schweißbrennereinheit 18 vorzugsweise eine nicht abschmelzende Elektrode angeordnet, wie dies zum Beispiel bei dem WIG/TIG-Schweißen üblich ist.

Das Schlauchpaket 19, das mittels einer Kupplung 22 an die Schweißbrennereinheit 18 angeschlossen ist, enthält eine elektrische Schweißleitung 23, eine Gasversorgungsleitung 24 sowie einen Kühlkreislauf 25. Mittels der Gasversorgungsleitung 24 wird das Gas 13 von dem Gasspeicher 12 zur Schweißbrennereinheit 18 transportiert. Ebenso dient die elektrische Schweißleitung 23 zum Transport des in der Stromquelle 3 erzeugten Stroms zur Schweißbrennereinheit 18.

Der über die Schweißleitung 23 der Schweißbrennereinheit 18 zugeführte elektrische Strom dient zum Aufbauen eines Lichtbogens 26, insbesondere eines Arbeitslichtbogens, zwischen einer Elektrode der Schweißbrennereinheit 18 und einem zu schweißenden Werkstück 27, welches aus mehreren zu verbindenden Teilen gebildet ist. Das Werkstück 27 kann über eine weitere elektrische Schweißleitung 28 mit der Stromquelle 3 der Schweißvorrichtung 1 verbunden sein. Die beiden Schweißleitungen 23 und 28 bilden zusammen mit dem Lichtbogen 26 und der Stromquelle 3 einen geschlossenen Stromkreis.

Die Schweißbrennereinheit 18 kann über eine Kühlung verfügen. Hierzu wird der Schweißbrennereinheit 18 über den Kühlkreislauf 25 Kühlflüssigkeit, insbesondere Wasser, aus dem Wasserbehälter 9 zugeführt. Der Kühlkreislauf 25 wird dabei durch den Strömungswächter 19 überwacht. Eine nicht näher gezeigte Flüssigkeitspumpe wird bei Inbetriebnahme der Schweißbrennereinheit 18 gestartet, wodurch der Kühlkreislauf 25 zwischen dem Wasserbehälter 9 und der Schweißbrennereinheit 18 in Gang gesetzt wird. Prinzipiell ist es auch möglich, dass die Schweißbrennereinheit 18 nicht mit einer Flüssigkeitskühlung, sondern mit einer Luftkühlung ausgestattet ist.

Mittels der Ein-/Ausgabeeinheit 6 an der Zentraleinheit 2 können eine Vielzahl an Schweißparametern, Betriebsarten und/oder Schweißprogrammen eingestellt oder aufgerufen werden. Die mittels der Ein-/Ausgabeeinheit 6 eingestellten Schweißparameter, Betriebsarten und/oder Schweißprogramme werden an die Steuereinheit 5 weiter geleitet, welche dann entsprechend dieser Vorgaben die einzelnen Komponenten der Schweißvorrichtung 1 ansteuert und/oder entsprechende Sollwerte für eine Regelung oder Steuerung dieser einzelnen Komponenten vorgibt, so dass sich der gewünschte Schweißprozess einstellt.

Bei dem in Fig. 1 gezeigten Ausführungsbeispiel der Schweißvorrichtung 1 sind eine Vielzahl verschiedener Einzelkomponenten vorgesehen. Grundsätzlich gibt es nicht gezeigte alternative Ausgestaltungen, bei denen die Schweißvorrichtung nicht alle dieser Einzelkomponenten umfasst. Dies ist beispielsweise bei speziellen WIG-Geräten, MIG/MAG-Geräten oder Plasmageräten der Fall.

Die Schweißbrennereinheit 18 hat mindestens zwei unabhängig voneinander betreibbare, in der schematischen Darstellung gemäß Fig. 1 nicht genau gezeigte Schweißbrenner, mittels derer zwei Schweißprozesse durchgeführt werden können. Grundsätzlich kann die Schweißbrennereinheit 18 in alternativen Ausführungsbeispielen auch mehr als zwei gesonderte Schweißbrenner umfassen.

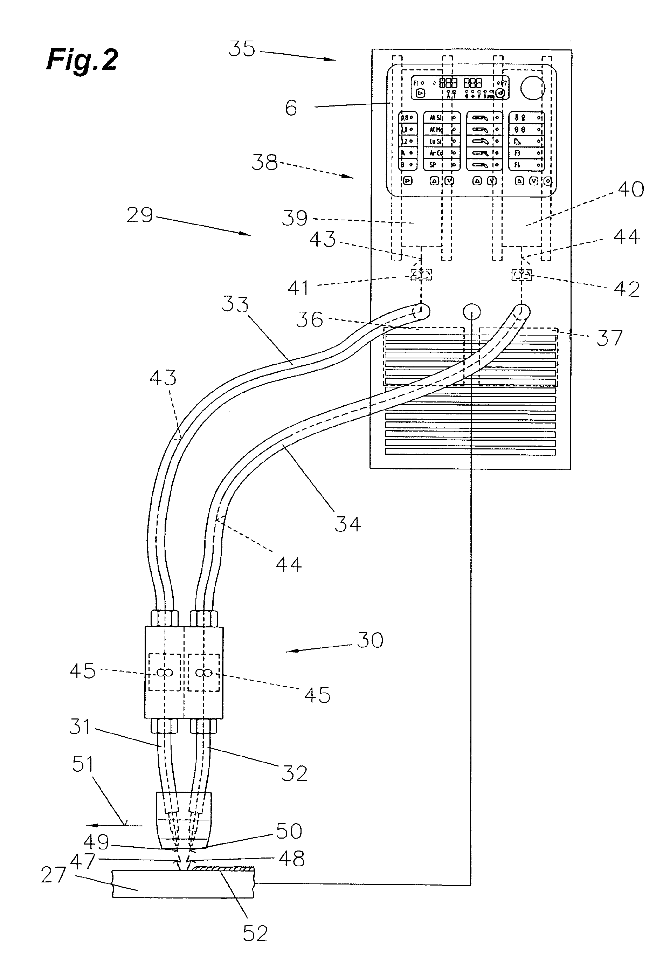

In Fig. 2 ist ein weiteres Ausführungsbeispiel einer Schweißvorrichtung 29 gezeigt, die eine Schweißbrennereinheit 30 mit zwei gesonderten, unabhängig voneinander zu betreibenden Schweißbrennern 31 und 32 enthält. Jeder der beiden Schweißbrenner 31 und 32 ist mit einem eigenen Schlauchpaket 33 bzw. 34 an eine Zentraleinheit 35, die man wiederum auch als das eigentliche Schweißgerät bezeichnen kann, angeschlossen. Mittels dieser beiden Schlauchpakete 33 und 34 werden die Schweißbrenner 31 und 32 unabhängig voneinander mit sämtlichen für die Durchführung eines Schweißprozesses benötigten Komponenten, wie beispielsweise dem Gas 13, dem elektrischen Strom und der Kühlflüssigkeit, versorgt. Insoweit wird auf die entsprechenden Ausführungen im Zusammenhang mit dem in Fig. 1 gezeigten Ausführungsbeispiel der Schweißvorrichtung 1 verwiesen.

Die Zentraleinheit 35 der Schweißvorrichtung 29 umfasst neben der nicht ausdrücklich gezeigten Steuereinheit 5 zwei gesonderte Stromquellen 36 und 37 sowie eine Drahtfördereinheit 38 mit zwei gesonderten Vorratstrommeln 39 und 40 und zwei Antriebseinheiten 41 und 42, mittels derer Schweißdrähte 43 und 44 von den beiden Vorratstrommeln 39 und 40 gefördert und über die Schlauchpakete 33 und 34 den Schweißbrenner 31 und 32 zugeführt werden. Optional kann in der Schweißbrennereinheit 30 für die beiden Schweißbrenner 31 und 32 jeweils eine zusätzliche Antriebseinheit 45 vorgesehen sein, welche bei dem in Fig. 2 gezeigten Ausführungsbeispiel beispielhaft und mit strichlierter Linienführung jeweils mit eingetragen ist. Die Schweißbrennereinheit 30 weist bei dem gezeigten Ausführungsbeispiel eine gemeinsame Gasdüse 46 für beide Schweißbrenner 31 und 32 auf.

Hinsichtlich der Funktionsweise der einzelnen Baugruppen und Komponenten der Schweißvorrichtung 29 wird auf die entsprechenden Ausführungen im Zusammenhang mit der in Fig. 1 gezeigten Schweißvorrichtung 1 verwiesen. Insbesondere umfasst die Zentraleinheit 35 der Schweißvorrichtung 29 auch eine Ein-/Ausgabeeinheit 6, mittels derer, genau wie bei der Schweißvorrichtung 1 Schweißparameter, Betriebsarten und/oder Schweißprogramme eingestellt werden können.

Im Folgenden wird die Funktionsweise der Schweißvorrichtung 29 beschrieben.

Der erste Schweißbrenner 31 ist zur Ausführung eines ersten Schweißprozesses und der zweite Schweißbrenner 32 zur Ausführung eines zweiten Schweißprozesses ausgebildet. Bevorzugt handelt es sich bei dem in Fig. 2 gezeigten Ausführungsbeispiel bei beiden Schweißbrennern 31 und 32 jeweils um einen MIG/MAG-Brenner, mittels derer jeweils ein Puls-Schweißprozess aber auch ein Kalt-Metall-Transfer-Schweißprozess durchgeführt werden kann. Andere Betriebsmodi sind ebenfalls grundsätzlich möglich.

In den beiden Schweißbrennern 31, 32 wird zu Beginn der Schweißprozesse ein Lichtbogen 47 bzw. 48 zwischen dem Schweißdrahtende 49 bzw. 50 des maßgeblichen Schweißdrahts 43 bzw. 44 einerseits und dem Werkstück 27 andererseits gezündet.

Der erste Schweißbrenner 31 ist dem zweiten Schweißbrenner 32 in einer Schweißrichtung 51 gesehen vorgeordnet. Die Schweißrichtung 51 ist dabei in etwa parallel zu einer Längsrichtung einer Schweißnaht 52 orientiert, mittels derer die Einzelteile des Werkstücks 27 verbunden werden. Grundsätzlich ist aber auch eine umgekehrte Anordnungs-Reihenfolge der Schweißbrenner 31, 32 möglich, beispielsweise bei einem Betrieb mit entgegengesetzter Schweißrichtung. Bei dieser entgegengesetzten Schweißrichtung wäre dann der Schweißbrenner 32 dem Schweißbrenner 31 in Schweißrichtung gesehen vorgeordnet. Außerdem können die beiden Schweißbrenner 31 und 32 in Bezug auf die Schweißrichtung 51 auf gleicher Höhe, aber senkrecht zur Schweißrichtung 51 beabstandet zueinander angeordnet sein.

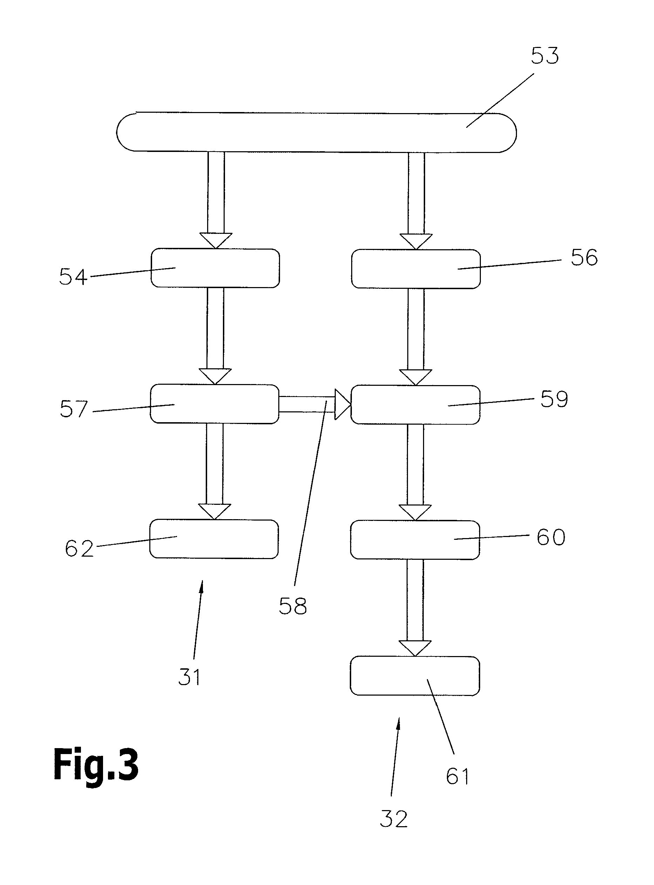

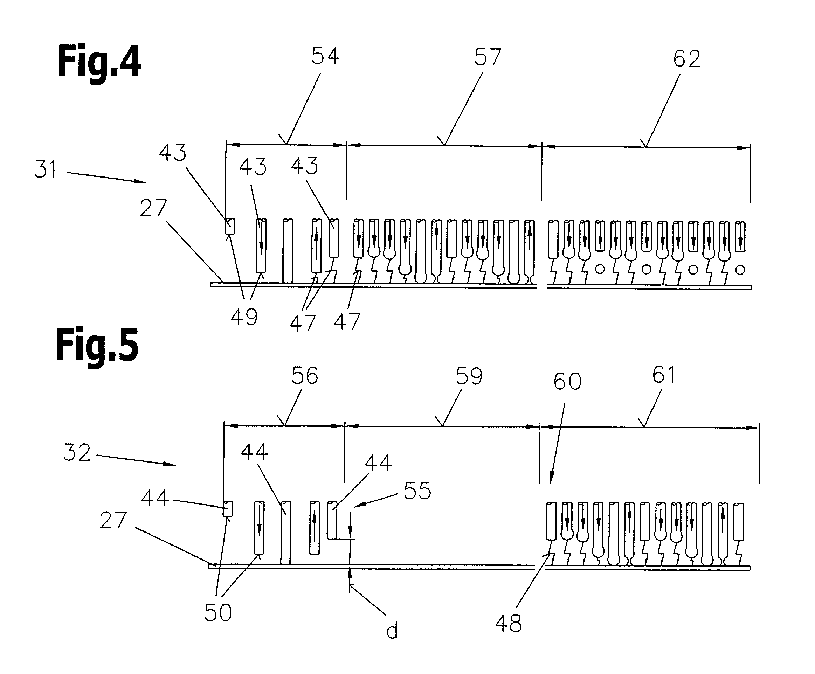

Im Folgenden wird anhand des Ablaufdiagramms gemäß Fig. 3 sowie der Bewegungsdiagramme gemäß Fig. 4 und 5 der koordinierte Startvorgang der beiden Schweißbrenner 31 und 32 beschrieben.

In Fig. 3 ist ein Ablaufdiagramm abgebildet, das den Startvorgang der beiden Schweißbrenner 31 und 32 wiedergibt. Während eines ersten Entscheidungsschritts 53 wird festgelegt, welcher der beiden Schweißbrenner 31 und 32 die führende Funktion (= Master) und welcher der beiden Schweißbrenner 31 und 32 die folgende Funktion (= Slave) haben soll. Wie bereits erwähnt, kann diese Zuordnung vorgegeben werden und sich auch je nach gewählter Betriebsart ändern. Hier wird beispielhaft angenommen, dass der Schweißbrenner 31 die Führungsfunktion und der Schweißbrenner 32 die Folgefunktion hat. Der linke Teil des Ablaufdiagramms von Fig. 3 betrifft den führenden Schweißbrenner 31, der rechte Teil den folgenden Schweißbrenner 32.

Nachdem die Zuordnung der Führungs- und der Folgefunktion im Schritt 53 festgelegt ist, wird bei beiden Schweißbrennern 31 und 32 der Schweißdraht 43, 44 nach vorne bewegt, bis das Schweißdrahtende 49, 50 das Werkstück 27 kontaktiert (siehe Fig. 4 und 5). Dieser Kontakt wird mittels einer Kurzschlussdetektion erkannt. Daraufhin erfolgt bei dem führenden Schweißbrenner 31 sofort die Zündung des Lichtbogens 47. Ab diesem Zeitpunkt brennt der Lichtbogen 47 an dem Schweißbrenner 31 insbesondere ununterbrochen während der ganzen Dauer des mit dem Schweißbrenner 31 durchgeführten Schweißprozesses. Die Vorwärtsbewegung, Kurzschlusserkennung und Lichtbogenzündung bei Rückwärtsbewegung des Schweißdrahts 43 ist für den führenden Schweißbrenner 31 im Zündungsschritt 54 (siehe Fig. 3 und 4) zusammengefasst.

Bei dem folgenden Schweißbrenner 32 erfolgt nach der Kurzschlusserkennung dagegen noch keine Lichtbogenzündung. Vielmehr wird der Schweißdraht 44 in eine Warteposition 55 (siehe Fig. 5) zurückbewegt. Dies wird in dem Ablaufdiagramm gemäß Fig. 3 durch den Kurzschluss- und Rückzugsschritt 56 (siehe Fig. 3 und 5) symbolisiert. In der Warteposition 55 befindet sich das Schweißdrahtende 50 des Schweißdrahts 44 in einem definierten und insbesondere einstellbaren Abstand d von dem Werkstück 27 (siehe Fig. 5).

Bei dem führenden Schweißbrenner 31 wird nun ein Anfangsschweißprozess 57, der beispielsweise als Kalt-Metall-Transfer-Schweißprozess mit vor- und rückwärts bewegtem Schweißdraht 43 ausgebildet ist, durchgeführt (siehe Fig. 3 und 4). Grundsätzlich kann der Anfangsschweißprozess 57 aber auch anders ausgestaltet sein, beispielsweise als Puls-Schweißprozess.

Sobald die Steuereinheit 5 einen vordefinierten oder eingestellten Prozessfortschritt erkennt oder sobald eine vordefinierte oder eingestellte Anfangszeit abgelaufen ist, ist der Anfangsschweißprozess 57 abgeschlossen. Dann erzeugt die Steuereinheit 5 ein Steuersignal 58 (siehe Fig. 3), welches den folgenden Schweißbrenner 32 veranlasst, seinen Warteschritt 59 (siehe Fig. 3 und 5) bzw. seine Wartezeit zu beenden und einen Zündungsschritt 60 (siehe Fig. 3 und 5) mit der Zündung des zweiten Lichtbogens 48 gefolgt von einem Anfangsschweißprozess 61 (siehe Fig. 3 und 5) des zweiten Schweißbrenners 32 durchzuführen. Auch der Anfangsschweißprozess 61 des zweiten Schweißbrenners 32 ist ein Kalt-Metall-Transfer-Schweißprozess mit vor- und rückwärts bewegtem Schweißdraht 44. Das Steuersignal 58 kann dabei insbesondere als digitales Signal ausgebildet sein. Vorzugsweise wird mittels eines extra dafür vorgesehenen Bits angezeigt, dass die Wartezeit bzw. der Warteschritt 59 für den folgenden Schweißbrenner 32 abgelaufen bzw. beendet ist.

Parallel zur Zündung des zweiten Lichtbogens 48 am folgenden Schweißbrenner 32 startet am führenden Schweißbrenner 31 der Hauptschweißprozess 62 (siehe Fig. 3 und 4), der beispielsweise als Puls-Schweißprozess ausgeführt ist.

Der Startvorgang der beiden Schweißbrenner 31 und 32 zeichnet sich durch eine definierte Wartezeit zeitlich beabstandete Zündung der beiden Lichtbögen 47 und 48 aus. Damit lassen sich undefinierte Prozessverhältnisse vermeiden. Vielmehr ist zu jedem Zeitpunkt eindeutig festgelegt, in welchem Zustand sich die beiden Schweißbrenner 31 und 32 befinden. Auf diese Weise lässt sich auch bereits während des Startvorgangs sehr genau festlegen, wie viel Material auf das Werkstück 27 zur Bildung der Schweißnaht 52 aufgebracht wird und wie groß der Einbrand sowie die Wärmeeintragung sind. Dies begünstigt sehr gute Schweißresultate.

## Patentansprüche

1. Schweißvorrichtung mit einer Zentraleinheit (2; 35) und einer Schweißbrennereinheit (18; 30), die an die Zentraleinheit (2; 35) anschließbar ist, wobei
a) die Zentraleinheit (2; 35) mindestens eine Schweißstromquelle (3; 36, 37) zur Bereitstellung von für den Betrieb der Schweißbrennereinheit (18; 30) benötigtem elektrischen Strom und eine Steuereinheit (5) umfasst,
b) die Schweißbrennereinheit (18; 30) mindestens einen ersten Schweißbrenner (31) mit einem ersten Schweißdraht (43) und einen zweiten Schweißbrenner (32) mit einem zweiten Schweißdraht (44) umfasst, und der erste Schweißbrenner (31) zur Durchführung eines ersten Schweißprozesses sowie der zweite Schweißbrenner (32) zur Durchführung eines zweiten Schweißprozesses ausgelegt ist, wobei beide Schweißbrenner (31, 32) unabhängig voneinander betreibbar sind,
c) die Steuereinheit (5) dazu ausgelegt ist, einen Startvorgang so durchzuführen, dass zuerst eine erste Lichtbogenzündung an einem der beiden Schweißbrenner (31) erfolgt und nach Ablauf einer Wartezeit (59) seit der ersten Lichtbogenzündung eine zweite Lichtbogenzündung an dem bis dahin ungezündeten anderen der beiden Schweißbrenner (32) erfolgt,
**dadurch gekennzeichnet, dass**
d) die Steuereinheit (5) dazu ausgelegt ist, vor oder während der an dem einem der beiden Schweißbrenner (31) erfolgenden ersten Lichtbogenzündung für den Schweißdraht (44) des anderen der beiden Schweißbrenner (32) vor dessen Lichtbogenzündung eine Vorwärtsbewegung in Richtung eines zu schweißenden Werkstücks (27) zu veranlassen, einen Kurzschluss dieses Schweißdrahts (44) mit dem Werkstück (27) zu erkennen und danach den Schweißdraht (44) des anderen der beiden Schweißbrenner (32) mit seinem Schweißdrahtende (50) in eine Warteposition (55) zu überführen, wobei sich das Schweißdrahtende des anderen der beiden Schweißbrenner (32) bis zum Ende der Wartezeit in der Warteposition befindet.

2. Schweißvorrichtung nach Anspruch 1, **dadurch gekennzeichnet, dass** zumindest einer der beiden Schweißprozesse als ein Puls-Schweißprozess, ein Sprühlichtbogen-Schweißprozess, ein Kurzlichtbogen-Schweißprozess oder ein Kalt-Metall-Transfer-Schweißprozess ausgebildet ist oder wenigstens einen als Puls-Schweißprozess, Sprühlichtbogen-Schweißprozess, Kurzlichtbogen-Schweißprozess oder Kalt-Metall-Transfer-Schweißprozess ausgebildeten Teilprozess enthält.

3. Schweißvorrichtung nach Anspruch 1 oder 2, **dadurch gekennzeichnet, dass** die Steuereinheit (5) dazu ausgelegt ist, vor der Lichtbogenzündung eine Vorwärtsbewegung des Schweißdrahts (43) des einen der beiden Schweißbrenner (31) in Richtung des zu schweißenden Werkstücks (27) zu veranlassen und einen Kurzschluss dieses Schweißdrahts (43) mit dem Werkstück (27) zu erkennen.

4. Schweißvorrichtung nach einem der vorhergehenden Ansprüche, **dadurch gekennzeichnet, dass** die Steuereinheit (5) dazu ausgelegt ist, vor der Lichtbogenzündung eine Vorwärtsbewegung zumindest eines der beiden Schweißdrähte (44) bis zum Berühren eines zu schweißenden Werkstücks (27) und danach eine Rückwärtsbewegung dieses Schweißdrahts (44), bis ein Schweißdrahtende (50) dieses Schweißdrahts (44) einen fest vorgegebenen oder einstellbaren Abstand (d) zu dem Werkstück (27) erreicht, zu veranlassen.

5. Schweißvorrichtung nach einem der vorhergehenden Ansprüche, **dadurch gekennzeichnet, dass** die Wartezeit (59) von der ersten bis zur zweiten Lichtbogenzündung fest vorgegeben oder einstellbar ist.

6. Schweißvorrichtung nach einem der Ansprüche 1 bis 4, **dadurch gekennzeichnet, dass** die Steuereinheit (5) dazu ausgelegt ist, eine Kopplung zwischen den beiden Schweißprozessen in der Gestalt herbeizuführen, dass sich die Wartezeit (59) von der ersten bis zur zweiten Lichtbogenzündung durch einen Prozessfortschritt des nach der ersten Lichtbogenzündung begonnenen Schweißprozesses oder zumindest eines Anfangsprozesses (57) des nach der ersten Lichtbogenzündung begonnenen Schweißprozesses bestimmt, wobei der als Maß für die Wartezeit (59) dienende Prozessfortschritt fest vorgegeben oder einstellbar ist.

7. Schweißvorrichtung nach Anspruch 6, **dadurch gekennzeichnet, dass** ein Steuersignal (58) das Erreichen des maßgeblichen Prozessfortschritts des nach der ersten Lichtbogenzündung begonnenen Schweißprozesses oder dessen Anfangsprozesses (57) anzeigt.

8. Schweißvorrichtung nach einem der vorhergehenden Ansprüche, **dadurch gekennzeichnet, dass** die Wartezeit (59) von der ersten bis zur zweiten Lichtbogenzündung höchstens drei Sekunden beträgt.

9. Schweißvorrichtung nach einem der vorhergehenden Ansprüche, **dadurch gekennzeichnet, dass** es einstellbar ist, an welchem der beiden Schweißbrenner (31, 32) die erste Lichtbogenzündung erfolgt.

10. Schweißverfahren mit mindestens einem ersten Schweißprozess und einem zweiten Schweißprozess, die miteinander kombiniert werden, wobei ein Startvorgang beider Schweißprozesse so durchgeführt wird,
a) dass zuerst ein erster Lichtbogen (47) im Rahmen eines der beiden Schweißprozesse gezündet wird,
b) nach der Zündung des ersten Lichtbogens eine Wartezeit (59) verstreicht, ehe ein zweiter Lichtbogen (48) im Rahmen des anderen der beiden Schweißprozesse gezündet wird,
**dadurch gekennzeichnet, dass**
c) vor oder während der Zündung des ersten Lichtbogens (47) ein an dem anderen der beiden Schweißprozesse beteiligter Schweißdraht (44) vor dessen Lichtbogenzündung in Richtung eines zu schweißenden Werkstücks (27) vorwärts bewegt wird, ein Kurzschluss dieses Schweißdrahts (44) mit dem Werkstück (27) erkannt wird, und der an dem anderen der beiden Schweißprozesse beteiligte Schweißdraht (44) mit seinem Schweißdrahtende (50) in eine Warteposition (55) überführt wird, wobei sich das Schweißdrahtende des anderen der beiden Schweißbrenner (32) bis zum Ende der Wartezeit in der Warteposition befindet.

11. Schweißverfahren nach Anspruch 10, **dadurch gekennzeichnet, dass** zumindest einer der beiden Schweißprozesse durch einen Puls-Schweißprozess, einen Sprühlichtbogen-Schweißprozess, einen Kurzlichtbogen-Schweißprozess oder einen Kalt-Metall-Transfer-Schweißprozess gebildet wird oder wenigstens einen als Puls-Schweißprozess, Sprühlichtbogen-Schweißprozess, Kurzlichtbogen-Schweißprozess oder Kalt-Metall-Transfer-Schweißprozess ausgebildeten Teilprozess enthält.

12. Schweißverfahren nach Anspruch 10 oder 11, **dadurch gekennzeichnet, dass** vor der Lichtbogenzündung eine Erkennung eines Kurzschlusses zwischen einem im Rahmen des einen der Schweißprozesse eingesetzten und nach vorne bewegten Schweißdrahts (43) und einem zu schweißenden Werkstück (27) durchgeführt wird.

13. Schweißverfahren nach einem der Ansprüche 10 bis 12, **dadurch gekennzeichnet, dass** vor der Lichtbogenzündung zumindest ein an den beiden Schweißprozessen beteiligter Schweißdraht (44) zunächst bis zum Berühren eines zu schweißenden Werkstücks (27) vorwärts und danach rückwärts bewegt wird, bis ein Schweißdrahtende (50) dieses Schweißdrahts (44) einen fest vorgegebenen oder einstellbaren Abstand (d) zu dem Werkstück (27) erreicht.

14. Schweißverfahren nach einem der Ansprüche 10 bis 13, **dadurch gekennzeichnet, dass** die Wartezeit (59) zwischen der Zündung des ersten und des zweiten Lichtbogens fest vorgegeben wird oder eingestellt wird.

15. Schweißverfahren nach einem der Ansprüche 10 bis 13, **dadurch gekennzeichnet, dass** eine Kopplung zwischen den beiden Schweißprozessen vorgesehen wird, so dass die Wartezeit (59) zwischen der Zündung des ersten und des zweiten Lichtbogens durch einen Prozessfortschritt des nach der ersten Lichtbogenzündung begonnenen Schweißprozesses oder zumindest eines Anfangsprozesses (57) des nach der ersten Lichtbogenzündung begonnenen Schweißprozesses bestimmt wird, wobei der als Maß für die Wartezeit (59) dienende Prozessfortschritt fest vorgegeben wird oder eingestellt wird.

16. Schweißverfahren nach Anspruch 15, **dadurch gekennzeichnet, dass** bei Erreichen des maßgeblichen Prozessfortschritts des nach der ersten Lichtbogenzündung begonnenen Schweißprozesses oder dessen Anfangsprozesses (57) ein Steuersignal (58) erzeugt wird, mittels dessen die Zündung des zweiten Lichtbogens (48) veranlasst wird.

17. Schweißverfahren nach einem der Ansprüche 10 bis 16, **dadurch gekennzeichnet, dass** für die Wartezeit (59) zwischen der Zündung des ersten Lichtbogens (47) und des zweiten Lichtbogens (48) ein Wert von höchstens drei Sekunden vorgesehen wird.

18. Schweißverfahren nach einem der Ansprüche 10 bis 17, **dadurch gekennzeichnet, dass** eingestellt wird, in Rahmen welches der beiden Schweißprozesse die erste Lichtbogenzündung erfolgt.

## Claims

1. Welding device with a central unit (2; 35) and a welding torch unit (18; 30), which can be connected to the central unit (2; 35), wherein
a) the central unit (2; 35) comprises at least one welding current source (3; 36, 37) for providing electric current needed to operate the welding torch unit (18; 30) and comprises a control unit (5),
b) the welding torch unit (18; 30) comprises at least a first welding torch (31) with a first welding wire (43) and a second welding torch (32) with a second welding wire (44), and the first welding torch (31) is configured to carry out a first welding process and the second welding torch (32) is configured to carry out a second welding process, the two welding torches (31, 32) being operable independently of one another,
c) the control unit (5) is configured to carry out a starting process in such a way that firstly a first arc ignition takes place at one of the two welding torches (31) and after a waiting time (59) since the first arc ignition has passed, a second arc ignition takes place at the other of the two welding torches (32), which until then was not ignited,
**characterised in that**
d) the control unit (5) is configured, before or during the first arc ignition taking place at the one of the two welding torches (31), to bring about a forward movement of the welding wire (44) of the other of the two welding torches (32) before the arc ignition thereof in the direction of a workpiece (27) to be welded, to detect a short circuit of this welding wire ( 44) with the workpiece (27), and then to transfer the welding wire end (50) of the welding wire (44) of the other of the two welding torches (32) into a waiting position (55), the welding wire end of the other of the two welding torches (32) being in the waiting position until the end of the waiting time.

2. Welding device according to claim 1, **characterised in that** at least one of the two welding processes is configured as a pulse welding process, a spray arc welding process, a short arc welding process or a cold metal transfer welding process or contains at least one part process configured as a pulse welding process, spray arc welding process, short arc welding process or cold metal transfer welding process.

3. Welding device according to claim 1 or 2, **characterised in that** the control unit (5) is configured to bring about a forward movement of the welding wire (43) of the one of the two welding torches (31) before the arc ignition thereof in the direction of the workpiece (27) to be welded and to detect a short circuit of this welding wire (43) with the workpiece (27).

4. Welding device according to any one of the preceding claims, **characterised in that** the control unit (5) is configured to bring about a forward movement of at least one of the two welding wires (44) before the arc ignition thereof until a workpiece (27) to be welded is contacted and thereafter to bring about a backward movement of this welding wire (44) until a welding wire end (50) of this welding wire (44) reaches a rigidly predetermined or adjustable distance (d) from the workpiece (27).

5. Welding device according to any one of the preceding claims, **characterised in that** the waiting time (59) from the first to the second arc ignition is rigidly predetermined or adjustable.

6. Welding device according to any one of claims 1 to 4, **characterised in that** the control unit (5) is configured to bring about a coupling between the two welding processes such that the waiting time (59) from the first to the second arc ignition is determined by a process progress of the welding process that began after the first arc ignition or at least of an initial process (57) of the welding process that began after the first arc ignition, the process progress being used as a measure for the waiting time (59) being rigidly predetermined or adjustable.

7. Welding device according to claim 6, **characterised in that** a control signal (58) indicates the reaching of the decisive process progress of the welding process that began after the first arc ignition or its initial process (57).

8. Welding device according to any one of the preceding claims, **characterised in that** the waiting time (59) from the first to the second arc ignition is at most three seconds.

9. Welding device according to any one of the preceding claims, **characterised in that** an adjustment can be made as to at which of the two welding torches (31, 32) the first arc ignition takes place.

10. Welding method with at least a first welding process and a second welding process, which are combined with one another,
a starting process of the two welding processes being carried out in such a way that
a) a first arc (47) is firstly ignited in the course of the one of the two welding processes, and
b) after the ignition of the first arc, a waiting time (59) passes before a second arc (48) is ignited in the course of the other of the two welding processes,
**characterised in that**
c) before or during the ignition of the first arc (47), a welding wire (44) involved in the other of the two welding processes is moved forward in the direction of a workpiece (27) to be welded before the arc ignition thereof, a short circuit of this welding wire (44) with the workpiece (27) is detected, and the welding wire end (50) of the welding wire (44) involved in the other of the two welding welding processes is transferred into a waiting position (55), the welding wire end of the other of the two welding torches (32) being in the waiting position until the end of the waiting time.

11. Welding method according to claim 10, **characterised in that** at least one of the two welding processes is formed by a pulse welding process, a spray arc welding process, a short arc welding process or a cold metal transfer welding process or contains at least one part process configured as a pulse welding process, spray arc welding process, short arc welding process or cold metal transfer welding process.

12. Welding method according to claim 10 or 11, **characterised in that** before the arc ignition, an identification is carried out of a short circuit between a welding wire (43) that is used in the course of the one of the welding processes and moved forward and a workpiece (27) to be welded.

13. Welding method according to any one of claims 10 to 12, **characterised in that** before the arc ignition, at least one welding wire (44) involved in the two welding processes is firstly moved forward until a workpiece (27) to be welded is contacted and is then moved backward until a welding wire end (50) of this welding wire (44) reaches a rigidly predetermined or adjustable distance (d) from the workpiece (27).

14. Welding method according to any one of claims 10 to 13, **characterised in that** the waiting time (59) between the ignition of the first and the second arc is rigidly predetermined or adjusted.

15. Welding method according to any one of claims 10 to 13, **characterised in that** a coupling is provided between the two welding processes, so the waiting time (59) between the ignition of the first and the second arc is determined by a process progress of the welding process that began after the first arc ignition or at least of an initial process (57) of the welding process that began after the first arc ignition, the process progress being used as a measure for the waiting time (59) being rigidly predetermined or adjusted.

16. Welding method according to claim 15, **characterised in that** on reaching the decisive process progress of the welding process that began after the first arc ignition, or its initial process (57), a control signal (58) is produced, by means of which the ignition of the second arc (48) is brought about.

17. Welding method according to any one of claims 10 to 16, **characterised in that** a value of at most three seconds is provided for the waiting time (59) between the ignition of the first arc (47) and the second arc (48).

18. Welding method according to any one of claims 10 to 17, **characterised in that** an adjustment is made as to in the course of which of the two welding processes the first arc ignition takes place.

## Revendications

1. Dispositif de soudage comprenant une unité centrale (2 ; 35) et une unité de chalumeau de soudage (18 ; 30), qui peut être raccordée à l'unité centrale (2 ; 35), sachant
a) que l'unité centrale (2 ; 35) comprend au moins une source de courant de soudage (3 ; 36, 37) servant à fournir un courant électrique requis pour le fonctionnement de l'unité de chalumeau de soudage (18 ; 30) et une unité de commande (5),
b) que l'unité de chalumeau de soudage (18 ; 30) comprend au moins un premier chalumeau de soudage (31) pourvu d'un premier fil de soudage (43) et un deuxième chalumeau de soudage (32) pourvu d'un deuxième fil de soudage (44), et que le premier chalumeau de soudage (31) est mis au point pour effectuer un premier processus de soudage et le deuxième chalumeau de soudage (32) est mis au point pour effectuer un deuxième processus de soudage, sachant que les deux chalumeaux de soudage (31, 32) peuvent fonctionner indépendamment l'un de l'autre,
c) que l'unité de commande (5) est mise au point pour effectuer une opération d'initiation de telle manière qu'il se produise, dans un premier temps, un premier amorçage d'arc électrique au niveau de l'un des deux chalumeaux de soudage (31) et qu'il se produise, une fois un temps d'attente (59) écoulé depuis le premier amorçage d'arc électrique, un deuxième amorçage d'arc électrique au niveau de l'autre des deux chalumeaux de soudage (32), n'ayant pas encore subi d'amorçage,
caractérisé en ce
d) que l'unité de commande (5) est mise au point pour provoquer un mouvement en avant dans la direction d'une pièce à usiner (27) à souder avant ou pendant le premier amorçage d'arc électrique se produisant au niveau de l'un des deux chalumeaux de soudage (31) pour le fil de soudage (44) de l'autre des deux chalumeaux de soudage (32) avant son amorçage d'arc électrique, pour identifier un court-circuit dudit fil de soudage (44) avec la pièce à usiner (27) et pour, par la suite, amener dans une position d'attente (55) le fil de soudage (44) de l'autre des deux chalumeaux de soudage (32) par son extrémité de fil de soudage (50), sachant que l'extrémité de fil de soudage de l'autre des deux chalumeaux de soudage (32) se trouve dans la position d'attente jusqu'à la fin du temps d'attente.

2. Dispositif de soudage selon la revendication 1, **caractérisé en ce qu'**au moins un des deux processus de soudage est réalisé sous la forme d'un processus de soudage à impulsion, d'un processus de soudage à arc pulvérisant, d'un processus de soudage à arc court ou d'un processus de soudage à transfert à métal froid ou inclut au moins un processus de soudage à impulsion, un processus de soudage à arc pulvérisant, un processus de soudage à arc court ou un processus de soudage à transfert à métal froid.

3. Dispositif de soudage selon la revendication 1 ou 2, **caractérisé en ce que** l'unité de commande (5) est mise au point pour provoquer, avant l'amorçage d'arc électrique, un mouvement en avant du fil de soudage (43) de l'un des deux chalumeaux de soudage (31) en direction de la pièce à usiner (27) à souder et pour identifier un court-circuit dudit fil de soudage (43) avec la pièce à usiner (27).

4. Dispositif de soudage selon l'une quelconque des revendications précédentes, **caractérisé en ce que** l'unité de commande (5) est mise au point pour provoquer, avant l'amorçage d'arc électrique, un mouvement en avant au moins d'un des fils de soudage (44) jusqu'à venir en contact avec une pièce à usiner (27) à souder puis un mouvement en arrière dudit fil de soudage (44) jusqu'à ce qu'une extrémité de fil de soudage (50) dudit fil de soudage (44) atteigne une distance (d) prédéfinie de manière fixe ou pouvant être réglée par rapport à la pièce à usiner (27).

5. Dispositif de soudage selon l'une quelconque des revendications précédentes, **caractérisé en ce que** le temps d'attente (59) est prédéfini de manière fixe ou peut être réglé depuis le premier amorçage d'arc électrique jusqu'au deuxième amorçage d'arc électrique.

6. Dispositif de soudage selon l'une quelconque des revendications 1 à 4, **caractérisé en ce que** l'unité de commande (5) est mise au point pour assurer un couplage entre les deux processus de soudage de manière à ce que le temps d'attente (59) depuis le premier amorçage d'arc électrique jusqu'au deuxième amorçage d'arc électrique se détermine par une progression de processus du processus de soudage commencé après le premier amorçage d'arc électrique ou par une progression au moins d'un processus de lancement (57) du processus de soudage commencé après le premier amorçage d'arc électrique, sachant que la progression de processus servant de mesure pour le temps d'attente (59) est prédéfinie de manière fixe ou peut être réglée.

7. Dispositif de soudage selon la revendication 6, **caractérisé en ce qu'**un signal de commande (58) indique lorsque la progression de processus déterminante du processus de soudage commencé après le premier amorçage d'arc électrique ou de son processus de lancement (57) est atteinte.

8. Dispositif de soudage selon l'une quelconque des revendications précédentes, **caractérisé en ce que** le temps d'attente (59) depuis le premier amorçage d'arc électrique jusqu'au deuxième amorçage d'arc électrique est de trois secondes au maximum.

9. Dispositif de soudage selon l'une quelconque des revendications précédentes, **caractérisé en ce qu'**il est possible de régler au niveau duquel des deux chalumeaux de soudage (31, 32) le premier amorçage d'arc électrique se produit.

10. Procédé de soudage comprenant au moins un premier processus de soudage et un deuxième processus de soudage, qui sont combinés entre eux, sachant qu'une opération d'initiation des deux processus de soudage est effectuée de telle manière
a) que dans un premier temps un premier arc électrique (47) est amorcé dans le cadre d'un des deux processus de soudage,
b) qu'un temps d'attente (59) s'écoule après l'amorçage du premier arc électrique avant qu'un deuxième arc électrique (48) ne soit amorcé dans le cadre de l'autre des deux processus de soudage,
caractérisé en ce
c) qu'avant ou pendant l'amorçage du premier arc électrique (47), un fil de soudage (44) impliqué dans l'autre des deux processus de soudage est déplacé en avant avant son amorçage d'arc électrique en direction d'une pièce à usiner (27) à souder, en ce qu'un court-circuit dudit fil de soudage (44) avec la pièce à usiner (27) est identifié, et en ce que le fil de soudage (44) impliqué dans l'autre des deux processus de soudage est amené par son extrémité de fil de soudage (50) dans une position d'attente (55), sachant que l'extrémité de fil de soudage de l'autre des deux chalumeaux de soudage (32) se trouve dans la position d'attente jusqu'à la fin du temps d'attente.

11. Procédé de soudage selon la revendication 10, **caractérisé en ce qu'**au moins un des deux processus de soudage est formé par un processus de soudage à impulsion, un processus de soudage à arc pulvérisant, un processus de soudage à arc court ou un processus de soudage à transfert à métal froid ou inclut au moins un processus partiel réalisé sous la forme d'un processus de soudage à impulsion, d'un processus de soudage à arc pulvérisant, d'un processus de soudage à arc court ou d'un processus de soudage à transfert à métal froid.

12. Procédé de soudage selon la revendication 10 ou 11, **caractérisé en ce qu'**avant l'amorçage d'arc électrique, une identification d'un court-circuit entre un fil de soudage (43) utilisé dans le cadre de l'un des processus de soudage et déplacé vers l'avant et une pièce à usiner (27) à souder est effectuée.

13. Procédé de soudage selon l'une quelconque des revendications 10 à 12, **caractérisé en ce qu'**avant l'amorçage d'arc électrique au moins un fil de soudage (44) impliqué dans les deux processus de soudage est déplacé en avant dans un premier temps jusqu'à venir en contact avec une pièce à usiner (27) à souder puis en arrière jusqu'à ce qu'une extrémité de fil de soudage (50) dudit fil de soudage (44) atteigne une distance (d) préfinie de manière fixe ou pouvant être réglée par rapport à la pièce à usiner (27).

14. Procédé de soudage selon l'une quelconque des revendications 10 à 13, **caractérisé en ce que** le temps d'attente (59) entre l'amorçage du premier et du deuxième arc électrique est prédéfini de manière fixe ou est réglé.

15. Procédé de soudage selon l'une quelconque des revendications 10 à 13, **caractérisé en ce qu'**un couplage entre les deux processus de soudage est prévu de sorte que le temps d'attente (59) entre l'amorçage du premier et du deuxième arc électrique est déterminé par une progression de processus du processus de soudage commencé après le premier amorçage d'arc électrique ou au moins d'un processus de lancement (57) du processus de soudage commencé après le premier amorçage d'arc électrique, sachant que la progression de processus servant de mesure pour le temps d'attente (59) est prédéfinie de manière fixe ou est réglée.

16. Procédé de soudage selon la revendication 15, **caractérisé en ce que** lorsque la progression de processus déterminante du processus de soudage commencé après le premier amorçage d'arc électrique ou de son processus de lancement (57) est atteinte, un signal de commande (58) est généré, au moyen duquel l'amorçage du deuxième arc électrique (48) est provoqué.

17. Procédé de soudage selon l'une quelconque des revendications 10 à 16, **caractérisé en ce qu'**une valeur de trois secondes au maximum est prévue pour le temps d'attente (59) entre l'amorçage du premier arc électrique (47) et du deuxième arc électrique (48).

18. Procédé de soudage selon l'une quelconque des revendications 10 à 17, **caractérisé en ce qu'**est réglé dans le cadre duquel des deux processus de soudage le premier amorçage d'arc électrique se produit.
